Europäisches Patentamt

European Patent Office

Office européen des brevets

(11) Veröffentlichungsnummer: **0 016 378**
**B1**

(19)

# (12) EUROPÄISCHE PATENTSCHRIFT

(45) Veröffentlichungstag der Patentschrift:
07.10.81

(51) Int. Cl.³: **B 01 J 13/02**

(21) Anmeldenummer: **80101130.5**

(22) Anmeldetag: **06.03.80**

(54) Verfahren zur kontinuierlichen Herstellung von Mikrokapseln.

(30) Priorität: **14.03.79 DE 2909906**

(43) Veröffentlichungstag der Anmeldung:
**01.10.80 Patentblatt 80/20**

(45) Bekanntmachung des Hinweises auf die Patenterteilung:
**07.10.81 Patentblatt 81/40**

(84) Benannte Vertragsstaaten:.
**BE CH DE FR GB IT NL SE**

(56) Entgegenhaltungen:
**DE-A-1 519 853**

(73) Patentinhaber: **BAYER AG, Zentralbereich Patente, Marken und Lizenzen, D-5090 Leverkusen 1, Bayerwerk (DE)**

(72) Erfinder: **Dahm, Manfred, Dr., Am Falkenberg 29, D-5090 Leverkusen 31 (DE)**
Erfinder: **Jabs, Gert, Dr., Wingensieferkamp 25, D-5068 Odenthal (DE)**
Erfinder: **Koglin, Bernd, Dr., Zehntweg 27, D-5060 Bergisch-Gladbach 2 (DE)**
Erfinder: **Schnöring, Hildegard, Dr., Rappenweg 8, D-5600 Wuppertal 11 (DE)**

Verfahren zur kontinuierlichen Herstellung von Mikrokapseln

Es ist bekannt, dass man u. a. aus Polyisocyanaten und Polyaminen durch Isocyanatpolyaddition Mikrokapseln dikontinuierlich erzeugen kann, indem man zuerst das einzukapselnde Material (Kernmaterial) und das Polyisocyanat in der wässrigen Lösung eines Dispergierhilfsmittels dispergiert, der Emulsion das Polyamin zusetzt und so Hüllen aus dem Polyadditionsprodukt um die disperse organische Phase erzeugt. Erhalten wird eine Suspension der Mikrokapseln in der wässrigen Dispergiermittellösung.

Diese Methode ist teuer, hat nur niedrige Raum/Zeit-Ausbeuten und liefert Mikrokapseln mit einer breiten Grössenverteilung und einem z. B. für Reaktionsdurchschreibepapiere viel zu grossen Anteil an grossen Kapseln. Für Reaktionsdurchschreibepapier richtet sich die Obergrenze der zulässigen Grösse nach der Rauhigkeit des Papiers, auf das die Kapseln aufgebracht werden sollen. In der Praxis liegt diese Obergrenze bei 15 bis 25 $\mu$m. Man strebt an, Kapseln möglichst einheitlicher Grösse nahe unterhalb dieses Grenzwertes zu erhalten.

Man kann die zu grossen Kapseln aus der nach dem eingangs geschilderten Verfahren erhaltenen Suspensionen abtrennen, allerdings erfordert dies einen zusätzlichen Verfahrensschritt und ist mit erheblichem Ausbeuteverlust verbunden, weil es keine technisch anwendbaren Verfahren gibt, die Kapseldispersionen bei den gegebenen Kapselgrössen scharf zu trennen. Selbst bei starker Verminderung der Konzentration, die ihrerseits wieder eine erhebliche Ausbeuteverminderung bedeutet, erreicht man keine hinreichende Trennschärfe.

Gemäss DE-AS 2 311 712 hat man versucht, Mikrokapseln in einer Verfahrensstufe herzustellen durch gleichzeitiges, aber getrenntes Einspeisen einer Mischung aus Polyisocyanat und Kernmaterial, eines Polyamins und einer wässrigen Phase in eine Zone hoher Turbulenz. Auch hier erreicht man nicht die für Reaktionsdurchschreibepapiere ideale Verteilung der Mikrokapselgrössen mit einer definierten Obergrenze der Teilchengrössen.

Gegenstand der Erfindung ist nun ein kontinuierliches Verfahren zur Herstellung von Mikrokapseln mit polymeren Kapselwänden und festem oder flüssigem Kapselinhalt, in dem ein Polyisocyanat mit dem zu umhüllenden Stoff vermischt wird, dieses Gemisch, ein Polyamin und eine ein Dispergierhilfsmittel enthaltende wässrige Phase umgesetzt werden, das dadurch gekennzeichnet ist, dass die Umsetzung in einer Mischzone mit hoher Turbulenz unter Bildung einer Emulsion eingeleitet und das Reaktionsgut dann in eine mehrstufige Kesselkaskade überführt wird, wobei die Temperatur von Stufe zu Stufe erhöht und innerhalb einer Stufe konstant gehalten wird. Arbeitet man nicht mit stufenweiser Temperatursteigerung, dann bildet sich ein Agglomerat, das nicht weiterverarbeitet werden kann. Bevorzugt ist die Verweilzeit in der Mischzone von weniger als 5 Min., besonders bevorzugt von weniger als 1 Min., wobei das in die Mischzone kontinuierlich eingespeiste Flüssigkeitsvolumen 0,3- bis 10mal, bevorzugt 0,5- bis 3mal, in die Mischzone rezirkuliert wird. Diese Arbeitsweise, d. h. die Rezirkulierung der reagierenden Flüssigkeit durch die Mischzone, trägt zur Verhinderung grosser Kapseln bei. Die Mischzone kann z. B. als kleiner Rührkessel oder als Inline-Mischer in eine Rohrleitung eingeflanscht werden, wenn nur für die entsprechende Rezirkulierung technische Vorsorge getroffen ist.

Da man die Umsetzung sowohl mit Wasser als auch mit einem Polyamin einleiten kann, kann man das Polyamin erfindungsgemäss in die Mischzone, aber auch ganz oder teilweise in den ersten oder zweiten Kessel der Kaskade einspeisen. Das Volumen des ersten Kessels im Verhältnis zum Volumen der Mischzone kann umso grösser sein, je geringer die Konzentration der wässrigen Lösung des Polyamins ist. Beispielsweise kann bei einer 2,5gewichtsprozentigen Polyaminlösung für die Herstellung einer 20%igen Mikrokapseldispersion das Volumen des ersten Kessels 25mal so gross sein wie das der Mischzone. Für eine 30%ige Suspension bei 10%iger Polyaminlösung darf das Volumen des ersten Kessels das 3,5fache des der Mischzone sein.

Während die Temperatur in der Mischzone 0 bis 100 °C sein darf, muss die Temperatur im ersten Kessel unter 60 °C, bevorzugt unter 40 °C liegen. Dies gilt, wenn das Polyamin in den ersten Kessel der Kaskade eingespeist wird. Ist das Polyamin in die Mischzone eingespeist, dann darf die Temperatur in der Mischzone nicht über 50 °C sein, und im ersten Kessel ebenfalls nicht über 50 °C.

Erfindungsgemäss gelingt es, die Abreaktionszeit ohne Agglomeration der Kapseln zu verringern durch Erhöhung der Temperatur von Stufe zu Stufe der Kesselkaskade bis auf eine Maximaltemperatur und längere Verweilzeiten bei jeder der eingestellten Temperaturen. Es wird also die aus der Mischzone austretende Suspension durch eine mehrstufige Kesselkaskade geleitet, wobei die aufeinanderfolgenden Kessel jeweils eine konstante Temperatur haben, die stromabwärts stufenweise auf die Maximaltemperatur ansteigt. Die in jeder Stufe höchstmögliche Temperatur, bei der noch keine Agglomeration eintritt, lässt sich bei gegebener mittlerer Verweilzeit für die einzelnen Kessel leicht durch einen Vorversuch bestimmen. Dabei ist ein Mass für den Fortschritt der Polyadditionsreaktion der pH-Wert der Lösung. Man ermittelt also bei verschiedenen pH-Werten und damit Umsetzungsgraden die Temperaturen, bei denen die Agglomeration beginnt und kann dann sofort pH-Wert und höchstzulässige Temperatur einander zuordnen. Im allgemeinen kommt man mit Verweilzeiten von 15 bis 25 Min. pro Kessel aus, wenn die Temperatur in Schritten von 8 bis 15 °C auf 60 bis 70 °C im letzten Kessel erhöht wird.

In dem Kessel der Kaskade, in dem der pH-Wert unter 7 absinkt, tritt starke Schaumentwicklung auf. Diese Schaumentwicklung lässt sich mit den üblichen Mitteln, z. B. Zugabe eines Entschäumers oder Abziehen der Suspension vom Boden eines Kessels mit einer Pumpe und Aufsprühen auf die Dispersionsoberfläche desselben oder des nächsten Kessels beherrschen. In einer bevorzugten Ausführungsform der Erfindung sorgt man durch automatische Titration mit Lauge oder Laugenbildnern dafür, dass sich der pH-Wert auf einen Wert nicht unterhalb 7 einstellt. Dann tritt kein Schäumen auf, die Abreaktion und das spätere Verhalten der Mikrokapseln werden dennoch nicht gestört.

Als Polyisocyanate können grundsätzlich alle bekannten Polyisocyanate eingesetzt werden, beispielsweise Toluylendiisocyanat, Xylylendiisocyanat als Beispiel für aromatische Polyisocyanate, Hexamethylendiisocyanat als Beispiel für aliphatische Polyisocyanate. Geeignet sind auch NCO-Prepolymere, d. h., Umsetzungsprodukte von Polyisocyanaten mit Diolen oder Polyolen, die noch mindestens 2 freie endständige NCO-Gruppen tragen. Besonders geeignet sind Isocyanate auf Oxadiazintrion- und auf Biuretbasis, d. h., Reaktionsprodukte von Diisocyanaten, z. B. Hexamethylendiisocyanat mit sich selbst unter Bildung von Ringstrukturen.

Geeignete Polyamine sind primäre und sekundäre Di- und Polyamine aromatischer oder aliphatischer Natur. Bevorzugt sind aliphatische Di- und Polyamine wie:

Ethylendiamin-(1,2), Bis(3-aminopropyl)-amin, Hydrazin, Hydrazinethanol-(2), Bis-(2-methylaminoethyl)-methylamin, 1,4-Diaminocyclohexan, 3-Amino-1-methyl-aminopropan, N-Hydroxy-ethylethylendiamin, N-Methyl-bis(3-aminopropyl)-amin, 1,4-Diamino-n-butan, 1,6-Diamino-n-hexan, Ethylen-(1,2)-diamin-N-Ethyn-sulfonsäure (als Alkalisalz), 1-Aminoethylethylendiamin-(1,2), Bis-(N,N'-aminoethyl)-ethylendiamin-(1,2). Hydrazin und seine Salze werden im vorliegenden Zusammenhang ebenfalls als Diamine angesprochen.

Beispiel 1

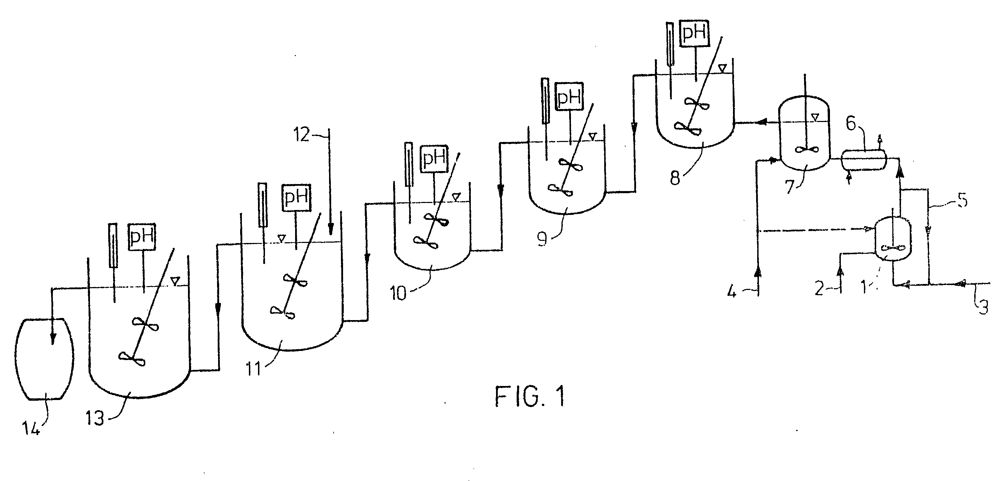

Die verwendete Vorrichtung zeigt die Fig. 1.

100 kg/h einer 0,5gewichtsprozentigen wässrigen Dispergatorlösung einer Temperatur von 10 °C und 60 kg/h einer Lösung von 5 Gew.-% Kristallviolett-Lacton (Farbgeber) und 15 Gew.-% eines Polyisocyanats (auf Basis Oxadiazintrion, 21 Gew.-% NCO-Gehalt) in Diisopropylnaphthalin bei einer Temperatur von 20 °C werden durch den Einlass (3) bzw. den Einlass (2) in die erste Mischzone (1) (Volumen 1 Liter) kontinuierlich eindosiert. Dies entspricht einer Verweilzeit von etwa 0,4 Min.

Ein Volumenstrom von 500 l/h wird im Kreis durch das Rohrsystem (5) gepumpt. Ein konstanter Flüssigkeitsstrom der gebildeten Emulsion wird durch den Wärmetauscher (6) unter Abkühlen auf 30 °C in die zweite Mischzone (Volumen 5 Liter) (7) geführt und gleichzeitig durch Einlass (4) 28 kg/h einer wässrigen Lösung von 3,05 Gew.-% Diethylentriamin und 1,72 Gew.-% Ethylendiamin. Die mittlere Verweilzeit ist hier knapp 2 Min.

Aus der zweiten Mischzone (7) gelangt die darin gebildete Suspension von Mikrokapseln in den Rührkessel (8) (50 l Inhalt; Verweilzeit 16 Min.) bei 35 °C, dann in den Kessel (9) (50 l Inhalt; Verweilzeit 16 Min.) bei 40 °C, und schliesslich in den Rührkessel (10) (50 l Inhalt; Verweilzeit 16 Min.) bei 50 °C. Danach durchläuft die Mikrokapselsuspension zur Vervollständigung der Reaktion bei 60 °C die Kessel (11) und (13) (320 l Inhalt; Verweilzeit jeweils etwa 1,7 Stunden), worin sie langsam gerührt wird. Im Kessel (11) wird durch Zufügen von Natronlauge durch Einlass (12) der pH-Wert auf genau 7 eingestellt. Die fertigausreagierte Mikrokapselsuspension wird am Auslass (14) entnommen.

Beispiel 2

Es wird gearbeitet wie in Beispiel 1, aber 179 kg/h einer 0,5%igen wässrigen Dispergatorlösung von 30 °C und 96 kg/h einer Lösung von 5 Gew.-% N-benzoylleucomethylenblau und 15 Gew.-% des NCO-Diisocyanats des Beispiels 1 verwendet. Die Volumina der Mischzonen werden beibehalten. Die Kesselvolumina der Aufheizzone werden verdoppelt. Die Verweilzeitzone wird um einen dritten Kessel gleichen Volumens ergänzt.

Beispiel 3

Wässrige Phase ist eine 0,5%ige wässrige Dispergiermittellösung. Organische Phase ist eine Lösung von 15% eines 21 Gew.-% NCO-Gruppen enthaltenden Produktes auf Basis Oxadiazintrion und 3,1% eines Farbgebers in einem Lösungsmittelgemisch aus 4 Teilen Diisopropylnaphthalin und 1 Teil Isoparaffin. 179 kg/h der auf 25 °C temperierten wässrigen Phase und 96 kg/h der auf 25 °C temperierten organischen Phase werden in die 1. Mischzone, die 1 l Füllvolumen aufweist, kontinuierlich eindosiert und dort mit 22 kg/h einer 5,5%igen wässrigen Kettenverlängerungslösung von 62,5% Diethylentriamin und 37,5% Ethylendiamin mit einer Temperatur von 25 °C vermischt. Die mittlere Verweilzeit in der 1. Mischzone beträgt 0,20 Min.

Eine (nicht eingezeichnete) Pumpe wälzt einen Volumenstrom von 500 l/h im Kreislauf durch diese Mischzone. Gleichzeitig fliesst ein konstanter Strom von 297 kg/h Kapseldispersion mit einer Temperatur von 35 °C in einen auf 35 °C temperierten Verweilzeitkessel mit 300 l Volumen (mittlere Verweilzeit 1 h) und von dort in die 2. Mischzone mit 6 l Füllvolumen. Er wird in dieser 2. Mischzone mit weiteren 22 kg/h der 5,5%igen wässrigen Kettenverlängererlösung mit einer Temperatur von 25 °C vermischt. Die mittlere Verweilzeit in der 2. Mischzone beträgt 1,1 Min., die Temperatur 34 °C.

Anschliessend wird die Mikrokapselsuspension durch vier Aufheizkessel mit je 100 l Volumen und den Temperaturen 36, 44, 52 und 60 °C auf die Endtemperatur von 60°C gebracht, auf der sie unter pH Konstanthaltung (pH 7) in drei Verweil-zeitkesseln von je 300 l Volumen geleitet wird.

## Patentansprüche

1. Kontinuierliches Verfahren zur Herstellung von Mikrokapseln mit polymeren Kapselwänden und festem oder flüssigen Kapselinhalt, in dem ein Polyisocyanat mit dem zu umhüllenden Stoff vermischt wird, dieses Gemisch, ein Polyamin und eine ein Dispergierhilfsmittel enthaltende wässrige Phase umgesetzt werden, dadurch gekennzeichnet, dass die Umsetzung in einer Mischzone mit hoher Turbulenz unter Ausbildung einer Emulsion eingeleitet und das Reaktionsgut dann in eine mehrstufige Kesselkaskade überführt wird, wobei die Temperatur von Stufe zu Stufe erhöht und innerhalb einer Stufe konstant gehalten wird.

2. Verfahren nach Anspruch 1, gekennzeichnet durch eine Nachreaktion in einer Zone, bestehend aus einem Kessel oder einer Kesselkaskade, zur Vervollständigung der Umsetzung.

3. Verfahren nach Anspruch 1, dadurch gekennzeichnet, dass ein pH-Wert von 7 eingehalten bzw. nicht unterschritten wird.

4. Verfahren nach Anspruch 1, dadurch gekennzeichnet, dass die Umsetzung in der Mischzone bei einer mittleren Verweilzeit von weniger als 5 Minuten eingeleitet wird, wobei das in die Mischzone kontinuierlich eingespeiste Flüssigkeitsvolumen 0,3- bis 10mal in die Mischzone rezirkuliert wird.

## Claims

1. Continuous process for the production of microcapsules having polymeric capsule walls and a solid or liquid capsule content, in which process a polyisocyanate is mixed with the substance to be encapsulated, and this mixture, a polyamine and an aqueous phase containing a dispersion aid are reacted, characterised in that the reaction is initiated in a mixing zone of high turbulence whereby an emulsion is formed and the reaction product is then transferred to a multiple-stage cascade of vessels, the temperature being increased from stage to stage and being kept constant during each stage.

2. Process according to Claim 1, characterised by a post reaction for completing the reaction in a zone consisting of a vessel or a cascade of vessels.

3. Process according to Claim 1, characterised in that the pH is kept at or does not fall below a value of 7.

4. Process according to Claim 1, characterised in that the reaction in the mixing zone is initiated with an average residence time of less than 5 minutes, the volume of liquid continuously introduced into the mixing zone being recirculated from 0,3 to 10 times into the mixing zone.

## Revendications

1. Procédé continu de fabrication de microcapsules à parois de capsule polymères et avec un contenu de capsule solide ou liquide, dans lequel on mélange un polyisocyanate avec la matière à envelopper et l'on fait réagir ce mélange, une polyamine et une phase aqueuse contenant un auxiliaire de dispersion, caractérisé en ce qu'on initie la réaction dans une zone de mélange à haute turbulence avec formation d'une émulsion puis on convertit la charge de réaction dans une cascade de cuves à plusieurs étages, la température étant augmentée d'étage en étage et maintenue constante à l'intérieur d'un étage.

2. Procédé selon la revendication 1, caractérisé par une post-réaction dans une zone consistant en une cuve ou en une cascade de cuves pour le parachèvement de la réaction.

3. Procédé selon la revendication 1, caractérisé en ce qu'une valeur de pH de 7 est maintenue ou non dépassée vers le bas.

4. Procédé selon la revendication 1, caractérisé en ce que la réaction dans la zone de mélange est initiée pour un temps de séjour moyen de moins de 5 minutes, le volume de liquide alimenté continuellement dans la zone de mélange étant recyclé 0,3 à 10 fois dans la zone de mélange.

FIG. 1